# EUROPEAN PATENT APPLICATION

(11) **EP 3 450 797 A1**
(43) Date of publication of application: **06.03.2019**
(21) Application number: 18771436.5
(22) Date of filing: 08.03.2018
(51) Int. Cl.: F16F 15/03, F16F 15/02, H02K 35/02

(54) **ELECTROMAGNETIC DAMPER**

(30) Priority: 21.03.2017 JP 2017054000
(71) Applicant: KYB Corporation, Tokyo 105-6111 (JP)
(72) Inventor: SATO, Kousuke, Tokyo 105-6111 (JP); OCHIAI, Hirotaka, Tokyo 105-6111 (JP)
(74) Representative: Markfort, Iris-Anne Lucie
(86) International application number: PCT/JP2018/009050
(87) International publication number: WO 2018/173779

(57) **Abstract**

An electromagnetic damper 100 according to an embodiment of the present invention includes a first tubular member 111, a second tubular member 121, a rod 123, a plurality of electromagnetic coils 113, permanent magnets 125, and a short circuit 130. The second tubular member 121 is mounted on the first tubular member 111 and is configured to be capable of being relatively displaced in one axis direction with respect to the first tubular member 111. The rod 123 extends in the one axis direction and is, at one end, fixed to the second tubular member 121. The plurality of electromagnetic coils 113 are disposed in either one of an inside of the first tubular member 111 or the rod 123. The permanent magnet generates induced electromotive force in the plurality of electromagnetic coils 113 by relative displacement with respect to the plurality of electromagnetic coils 113 and are disposed in the other of the inside of the first tubular member 111 or the rod 123. The short circuit 130 is connected to the plurality of electromagnetic coils 113 and shorts the terminals of the plurality of electromagnetic coils 113 to each other.

## Description

### Technical Field

The present invention relates to an electromagnetic damper utilizing a cylindrical linear motor.

### Background Art

In recent years, electromagnetic dampers are being developed for improving damping properties for automobiles, vehicles of railroads and the like, architectural structures, and the like.

For example, Patent Literature 1 has described a power generation type damper including: a first direct-current motor that functions as an electric generator; a ball screw mechanism that translates vibration of a vibration system into rotational motion and transmits it to the first direct-current motor; and a second direct-current motor that functions as a vibration exciter, in which direct current of the first direct-current motor is amplified by a current amplifier and the second direct-current motor is driven. With this configuration, it is said that the amplified current can flow through the second direct-current motor (vibration exciter), which can provide large exciting force.

### Citation List

### Patent Literature

Patent Literature 1: Japanese Patent Application Laid-open No. 2010-139024

### Disclosure of Invention

### Technical Problem

However, the power generation type damper described in Patent Literature 1 has a problem that the apparatus configuration is complicated due to the provision of the ball screw mechanism that translates vibration in the one axis direction into rotational motion. Further, it is impossible to sufficiently damp minute vibration due to backlash of the ball screw mechanism. In addition, it is difficult to provide a sufficient damping characteristic for vibration of a high frequency band.

In view of the above-mentioned circumstances, it is an object of the present invention to provide an electromagnetic damper capable of enhancing a damping characteristic for minute vibration and high-frequency vibration.

### Solution to Problem

In order to accomplish the above-mentioned object, an electromagnetic damper according to an embodiment of the present invention includes a first tubular member, a second tubular member, a rod, a plurality of electromagnetic coils, a permanent magnet, and a short circuit.

The second tubular member is mounted on the first tubular member and is configured to be capable of being relatively displaced in one axis direction with respect to the first tubular member.

The rod extends in the one axis direction and is, at one end, fixed to the second tubular member.

The plurality of electromagnetic coils are disposed in either one of an inside of the first tubular member or the rod.

The permanent magnet generates induced electromotive force in the plurality of electromagnetic coils by relative displacement with respect to the plurality of electromagnetic coils and is disposed in the other of the inside of the first tubular member or the rod.

The short circuit is connected to the plurality of electromagnetic coils and shorts terminals of the plurality of electromagnetic coils to each other.

The electromagnetic damper includes the short circuit that shorts the terminals of the electromagnetic coils to each other. Thus, during relative displacement of the permanent magnet with respect to the electromagnetic coils, the induced electromotive force is generated in the electromagnetic coils due to electromagnetic induction, and predetermined electromagnetic force that impedes movement of the second tubular member is generated. In this manner, with the electromagnetic damper, reaction force can be directly generated to the vibration in the one axis direction, and thus the damping characteristic for minute vibration and high-frequency vibration can be improved.

The short circuit may include a passive element capable of adjusting current flowing through the plurality of electromagnetic coils.

With this configuration, magnetic force (magnetic field) generated in the electromagnetic coils can be adjusted, and thus a damping coefficient of the electromagnetic damper can be arbitrarily adjusted.

The passive element may be a variable resistor.

The electromagnetic damper may further include an adjuster that is installed in an outside of the first and second tubular members and is capable of adjusting an electrical resistance value of the variable resistor.

With this configuration, the damping function can be arbitrarily adjusted also after the electromagnetic damper is mounted on a device.

The plurality of electromagnetic coils may include a plurality of ring wires including air core portions which are arranged in the one axis direction and which the rod penetrates. In this case, the short circuit shorts the plurality of ring wires to each other.

With this configuration, a desired vibration damping characteristic can be efficiently provided.

The electromagnetic damper may further include a supporting portion that supports the first tubular member, in which
the short circuit may include a wire that passes an inside of the supporting portion and connects to the plurality of electromagnetic coils.

With this configuration, the configuration of the electromagnetic damper can be downsized while protecting the wire.

The electromagnetic damper may further include a detector and a driving coil.

The detector is configured to be capable of detecting a position of the rod in the one axis direction.

The driving coil is disposed in the inside of the first tubular member and is configured to be capable of generating thrust in the one axis direction with respect to the rod when the driving coil is supplied with driving current generated on the basis of an output of the detector.

With this configuration, the electromagnetic damper having both of a passive damping action and an active damping action can be configured.

### Brief Description of Drawings

[Fig. 1] A cross-sectional view showing a maximum compression position of an electromagnetic damper according to a first embodiment of the present invention.
[Fig. 2] A cross-sectional view showing a maximum extension position of the electromagnetic damper.
[Fig. 3] A cross-sectional view showing a configuration of an electromagnetic damper according to a second embodiment of the present invention.

### Mode(s) for Carrying Out the Invention

Hereinafter, an embodiment of the present invention will be described with reference to the drawings. It should be noted that in the figures shown below, X-, Y-, and Z-axis directions are three axis directions orthogonal to one another.

### <First Embodiment>

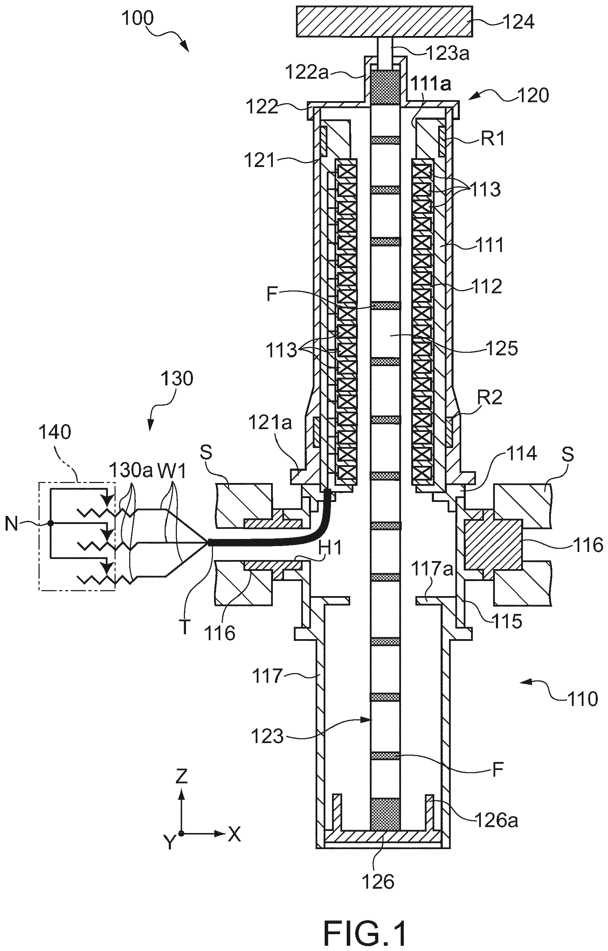

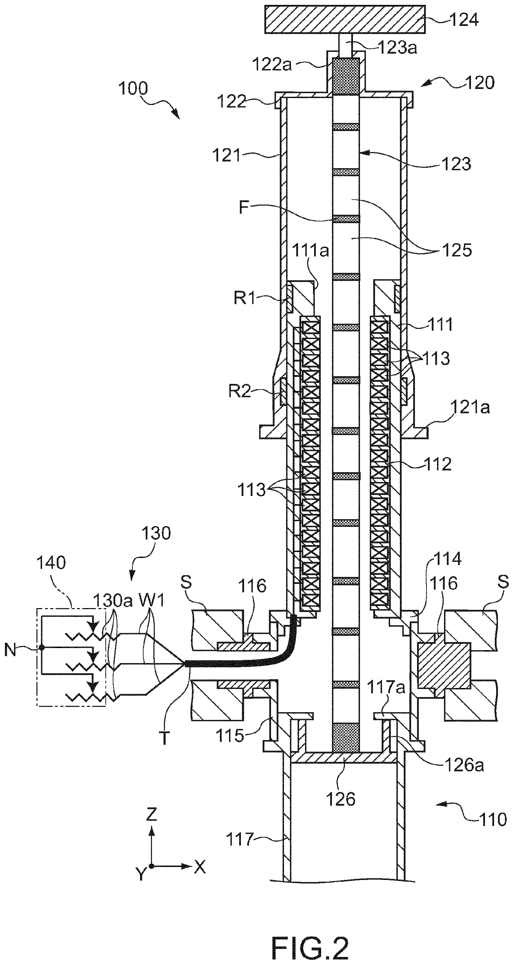

Figs. 1 and 2 are cross-sectional views each showing a configuration of an electromagnetic damper 100 according to this embodiment. Fig. 1 shows a maximum compression position of the electromagnetic damper 100. Fig. 2 shows a maximum extension position of the electromagnetic damper 100. It should be noted that the configuration of the electromagnetic damper 100 is not limited to the configuration described in the drawings of this application.

### [Configuration of Electromagnetic Damper]

As shown in Figs. 1 and 2, the electromagnetic damper 100 according to this embodiment includes a fixed portion 110, a movable portion 120, and a short circuit 130. The electromagnetic damper 100 is configured as a damper for a vehicle which is mounted between each wheel and a vehicle body of an automobile. For example, the fixed portion 110 is connected to a vehicle body side and the movable portion 120 is connected to a wheel side. It should be noted that the present technology is not limited thereto, and the fixed portion 110 may be connected to the wheel side and the movable portion 120 may be connected to the vehicle body side.

The fixed portion 110 includes a first tubular member 111 and an electromagnetic coils 113 disposed inside the first tubular member 111. The first tubular member 111 has an axial center parallel to the Z-axis direction, and retains the plurality of electromagnetic coils 113 via a coil holder 112 made of a magnetic material in an inner circumferential surface thereof. The first tubular member 111 is opened at one end portion (upper end portion in Figs. 1 and 2). The first tubular member 111 is fixed to a base portion 115 via an adaptor 114 at the other end portion (lower end portion in Figs. 1 and 2). The electromagnetic coils 113 include a plurality of ring wires arranged in the Z-axis direction and are connected to the short circuit 130 via wires W1.

The movable portion 120 includes a second tubular member 121 and a rod 123 that supports permanent magnets 125. The second tubular member 121 has an axial center parallel to the Z-axis direction and is mounted on an outer circumferential surface of the first tubular member 111 so as to be capable of being relatively displaced in the Z-axis direction with respect to the first tubular member 111. The second tubular member 121 is opened at one end portion (lower end portion in Figs. 1 and 2). A cover portion 122 is mounted at the other end portion (upper end portion in Figs. 1 and 2) of the second tubular member 121. The rod 123 extends inside the first tubular member 111 in the Z-axis direction and is fixed to the second tubular member 121 via the cover portion 122. The rod 123 is connected to a vibration receiving portion 124 at one end portion (upper end portion in Figs. 1 and 2).

The short circuit 130 shorts the terminals of the plurality of electromagnetic coils 113 to each other and induced electromotive force is generated in the plurality of electromagnetic coils 113 due to the relative displacement of the rod 123 (permanent magnets 125) with respect to the plurality of electromagnetic coils 113. With this configuration, as will be described later, a vibration damping effect of the movable portion 120 to the fixed portion 110 can be provided.

Hereinafter, detailed configurations of the respective portions of the electromagnetic damper 100 will be described.

### (Fixed Portion)

The fixed portion 110 includes the first tubular member 111, the coil holder 112, the adaptor 114, the base portion 115, supporting portions 116, and a bottom guide portion 117.

The first tubular member 111 is formed in a cylindrical shape including a hollow portion 111a inside and is supported on the base portion 115 via the adaptor 114. It should be noted that the shape of the first tubular member 111 is not limited to a cylindrical shape, and may be a square tubular shape or the like having a rectangular cross-section, for example.

The first tubular member 111 is inserted into the second tubular member 121 of the movable portion 120 and is brought into contact with the inner circumferential surface of the second tubular member 121. The first tubular member 111 has a function of guiding sliding of the movable portion 120 with respect to the fixed portion 110 in the Z-axis direction.

Further, a first slide ring R1 is provided in the outer circumferential surface on a side of the one end portion of the first tubular member 111. The first slide ring R1 has an annular shape, and is configured such that the outer circumferential surface thereof is brought into contact with the inner circumferential surface of the second tubular member 121.

The coil holder 112 is formed in a cylindrical shape concentric with the first tubular member 111, and is fixed to the inner circumferential surface of the first tubular member 111. The coil holder 112 retains the electromagnetic coils 113 including the plurality of ring wires on an inner circumferential side thereof. The respective ring wires are arranged with a predetermined space therebetween in the Z-axis direction and include air core portions that communicate with the hollow portion 111a.

The respective ring wires constituting the electromagnetic coils 113 are connected to the short circuit 130 via the wires W1. In this embodiment, the respective ring wires are classified in three phases of a U-phase, a V-phase, and a W-phase. The ring wires of the respective phases are respectively shorted due to the short circuit 130.

The configuration of each of the ring wires constituting the electromagnetic coils 113 is not particularly limited. The ring wire includes, for example, a polyurethane copper wire, a polyester copper wire, a polyesterimide copper wire, a polyamidimide copper wire, a polyimide copper wire, and the like.

The adaptor 114 has an annular shape and is mounted on one end (upper end in Figs. 1 and 2) of the base portion 115. The base portion 115 and the first tubular member 111 are coupled to each other. The adaptor 114 is configured to be capable of being brought into contact with a flange portion 121a provided at the one end portion of the second tubular member 121 to be projected radially outward. That is, the adaptor 114 functions as a locking portion that defines a closest position of the movable portion 120 to the base portion 115 and a position at which the second tubular member 121 is brought into contact with the adaptor 114 corresponds to the maximum compression position of the electromagnetic damper 100 (see Fig. 1).

As shown in Figs. 1 and 2, the base portion 115 supports the adaptor 114 and the bottom guide portion 117. The base portion 115 is supported by a support S on the vehicle body side via the supporting portions 116. The base portion 115 has a cylindrical shape. The adaptor 114 is fixed to one end portion of the base portion 115. The bottom guide portion 117 is fixed to the other opposite end portion of the base portion 115.

The supporting portions 116 are mounted at two positions on the outer circumferential surface of the base portion 115, the two positions being opposed to each other in the X-axis direction. The base portion 115 and the support S are coupled to each other via the supporting portions 116. In this embodiment, the supporting portions 116 include trunnions that support the base portion 115 to be rotatable about the X-axis. With this configuration, the electromagnetic damper 100 is coupled to the support S to be movable about a single axis in a tilted state. It should be noted that the supporting portions 116 may include a universal joint such as a ball joint and a clevis.

The support S according to this embodiment is a member for fixing the electromagnetic damper 100 to a predetermined vibration damping system, for example. The support S corresponds to, for example, a frame portion of a vehicle body in a case where the electromagnetic damper 100 is used to be mounted on a vehicle. The support S corresponds to a foundation of a building, for example, in a case where the electromagnetic damper 100 is used for damping for an architectural structure.

The electromagnetic damper 100 according to this embodiment is provided with a through-hole H1 penetrating one supporting portion 116 of the two supporting portions 116 supported by the support S and through the base portion 115 supported by that supporting portion 116 in the X-axis direction as shown in Fig. 1.

The bottom guide portion 117 is a member having a cylindrical shape concentric with the first tubular member 111. The bottom guide portion 117 has a function of guiding movement of a stopper 126 in the Z-axis direction, which is mounted at the other end of the rod 123 of the movable portion 120. At the one end portion of the bottom guide portion 117 which is on a side of the base portion 115, there is provided an annular projection 117a projected radially inward to be capable of being brought into contact with the stopper 126. That is, the bottom guide portion 117 functions as a locking portion that defines a furthest position of the movable portion 120 from the base portion 115 and a position at which the stopper 126 is brought into contact with the projection 117a of the bottom guide portion 117 corresponds to a maximum extension/compression position of the electromagnetic damper 100 (see Fig. 2).

The material of each of the members constituting the fixed portion 110 is not particularly limited. For example, a synthetic resin, a metal material, and the like can be employed. The metal material is favorable for ensuring rigidity and durability of the electromagnetic damper 100.

### (Movable Portion)

The movable portion 120 includes the second tubular member 121, the cover portion 122, the rod 123, and the stopper 126.

The second tubular member 121 includes a member having a cylindrical shape concentric with the first tubular member 111. It should be noted that the shape of the second tubular member 121 is not limited to the cylindrical shape and may be a square tubular shape or the like having a rectangular cross-section, for example.

A second slide ring R2 is provided at an end portion of the second tubular member 121 which is closer to the flange portion 121a. The second slide ring R2 has an annular shape and is configured such that an inner circumferential surface thereof is brought into contact with the outer circumferential surface of the first tubular member 111. In this embodiment, the first slide ring R1 that is brought into contact with the inner circumferential surface of the second tubular member 121 and the second slide ring R2 that is brought into contact with the outer circumferential surface of the first tubular member 111 are provided. With this configuration, relative movement (relative displacement) of the movable portion 120 with respect to the fixed portion 110 in the Z-axis direction can be stably guided.

The cover portion 122 closes the one end portion of the second tubular member 121 and prevents foreign substances and the like from entering the electromagnetic damper 100 (hollow portion 111a). A retaining portion 122a is provided at a center portion of the cover portion 122. The retaining portion 122a has a cylindrical shape and retains the one end portion of the rod 123. The rod 123 is fixed to the second tubular member 121 via this retaining portion 122a.

The stopper 126 is connected to the other end portion of the rod 123 and is formed in a disk-like shape having a circumferential portion to be slidable on the inner circumferential surface of the bottom guide portion 117. The circumferential portion of the stopper 126 is provided with an annular projection 126a extending toward the cover portion 122 in the Z-axis direction and is configured to be capable of being brought into contact with the projection 117a of the bottom guide portion 117 at the maximum extension position of the electromagnetic damper 100. Therefore, the maximum extension position of the electromagnetic damper 100 can be arbitrarily adjusted on the basis of a dimension of the projection 126a in the Z-axis direction.

As shown in Figs. 1 and 2, the rod 123 is a cylindrical bar-like member having a longitudinal direction in the Z-axis direction, is inserted into the hollow portion 111a, and penetrates the air core portions of the plurality of ring wires constituting the electromagnetic coils 113. The rod 123 is positioned on the axial center of the first tubular member 111 in such a manner that both ends thereof are retained by the cover portion 122 and the stopper 126. With this configuration, the rod 123 can be moved in the Z-axis direction without causing axial runout. In addition, durability against offset load in a direction crossing the Z-axis is ensured.

The rod 123 includes a shaft body 123a, the plurality of tubular permanent magnets 125 inserted in the shaft body 123a, and annular yokes F each provided between the plurality of permanent magnets 125. The shaft body 123a penetrates the retaining portion 122a of the cover portion 122 and is connected to the vibration receiving portion 124. The vibration receiving portion 124 is configured to have an arbitrary structure that transmits vibration of a vibration system such as a wheel to the electromagnetic damper 100.

The plurality of permanent magnets 125 are arranged in the Z-axis direction and are retained by the rod 123 such that the same poles are opposed to each other in the Z-axis direction. The types of permanent magnets 125 are not particularly limited and, for example, an Al-Ni-Co magnet, a ferrite magnet, a neodymium magnet, or the like may be employed. It should be noted that the yokes F may be omitted if unnecessary.

The size of the permanent magnets 125 and the number of permanent magnets 125 are not particularly limited and can be set as appropriate in a manner that depends on the number of ring wires and the arrangement pitch and the like of the ring wires constituting the electromagnetic coils 113. Further, in this embodiment, the permanent magnets 125 are arranged over a range of an approximately entire axial length of the rod 123. However, the permanent magnets 125 only need to be arranged over an axially long range such that those can pass at least the air core portions of the electromagnetic coils 113.

The material of the second tubular member 121, the cover portion 122, the stopper 126, and the like is not particularly limited. For example, a synthetic resin, a metal material, and the like can be employed. The metal material is favorable for ensuring rigidity and durability of the electromagnetic damper 100.

### (Short Circuit)

As shown in Figs. 1 and 2, the short circuit 130 includes a plurality of electrical wires W1 and variable resistors 130a. The plurality of electrical wires W1 are, at one ends, connected to respective terminals of the plurality of ring wires (electromagnetic coils 113) and are, at the other ends, commonly connected to form a neutral point N. That is, the short circuit 130 according to this embodiment includes an electrical circuit that shorts the terminals the plurality of ring wires constituting the electromagnetic coils 113 to each other.

As shown in Figs. 1 and 2, the plurality of electrical wires W1 are bundled as a tube T and are inserted in the through-hole H1. That is, the short circuit 130 has a configuration including the electrical wires W1 that pass the inside of the supporting portion 116 and the base portion 115 and are electrically connected to the electromagnetic coils 113.

With this configuration, the plurality of electrical wires W1 bundled as the tube T are housed in the electromagnetic damper 100. Thus, it is possible not only to suppress deterioration of the electrical wires W1 and but also to downsize the apparatus configuration of the electromagnetic damper 100. Therefore, the electromagnetic damper 100 according to this embodiment is favorably applicable to the suspension of the automobile and the like.

In this embodiment, as shown in Figs. 1 and 2, a part of the short circuit 130 is provided outside the electromagnetic damper 100, but not limited thereto. The entire short circuit 130 may be housed inside the electromagnetic damper 100. A power distribution method for the short circuit 130 is also not particularly limited. The power distribution method for the short circuit 130 is typically a 3-phase, 3-wire method. However, a single-phase, 2-wire method, a single-phase, 3-wire method, or the like may be employed.

The number of variable resistors 130a is not particularly limited and may be singular or plural. In this embodiment, the variable resistors are provided for the respective electrical wires W1 (electromagnetic coils 113 of the respective phases), but not limited thereto. A variable resistor may be commonly provided for the respective electrical wires W1. The types of variable resistors are also not particularly limited and any types of variable resistors such as a volume type and a rheostat type can be employed.

Instead of or in addition to the variable resistors 130a, other passive elements capable of limiting current flowing through the short circuit 130, such as a fixed resistance, a coil, and a capacitor, may be used or those may be combined and used. A connection form of those passive elements is not limited and may be a series circuit or may be a parallel circuit.

The electromagnetic damper 100 of this embodiment further includes an adjuster 140 capable of externally adjusting electrical resistance values of the variable resistors 130a. With this configuration, the vibration damping characteristic of the electromagnetic damper 100 can be arbitrarily adjusted. The adjuster 140 is typically disposed outside the fixed portion 110 and the movable portion 120. With this configuration, also after the electromagnetic damper 100 can be mounted on the vehicle body, the damper characteristics can be arbitrarily and individually adjusted. The adjuster 140 may typically include a dial type or slide type operation element and may include any number of press buttons and the like.

### [Operation of Electromagnetic Damper]

Next, a typical operation of the electromagnetic damper 100 configured in the above-mentioned manner will be described.

In this embodiment, the electromagnetic damper 100 is installed between the vehicle body and the wheel, and has a function of damping vibration transmitted from the wheel side to the vehicle body side and suppressing change in the attitude of the vehicle body. That is, when vibration from the wheel side is input into the vibration receiving portion 124, the electromagnetic damper 100 is extended and compressed. During relative displacement of the rod 123 (permanent magnets 125) with respect to the electromagnetic coils 113, induced electromotive force is generated in each electromagnetic coil 113 due to electromagnetic induction. In the short circuit 130, the respective terminals of the electromagnetic coils 113 is shorted to each other. Therefore, induced current flows in the respective ring wires, such that predetermined electromagnetic force that impedes movement of the rod 123 acts on the rod 123. In this manner, a vibration damping action due to the electromagnetic damper 100 can be provided.

As described above, the electromagnetic damper 100 of this embodiment includes a cylindrical linear motor in which linear vibration of the vibration system is directly input. Thus, backlash is not present as compared to a conventional electromagnetic damper including a ball screw mechanism that translates linear vibration into rotational motion. Therefore, a stable damping action can be provided also for minute vibration having a small amplitude. Further, it can sufficiently follow high-speed vibration, and thus a stable vibration damping characteristic can also be provided for a relatively high frequency band.

In addition, the electromagnetic damper 100 can be configured without needing an external power supply, an amplification circuit, and the like. Thus, simplification of the apparatus configuration, downsizing, and cost reduction can be achieved.

Then, with the electromagnetic damper 100 of this embodiment, due to the provision of the variable resistors 130a (adjuster 140) capable of adjusting characteristics of current flowing through the electromagnetic coils 113, a damping coefficient of the electromagnetic damper 100 can be arbitrarily adjusted. In addition, the adjuster 140 is installed outside the electromagnetic damper 100, and thus the electromagnetic damper 100 can be easily adjusted also after it is mounted on the vehicle body.

Moreover, with the electromagnetic damper 100 of this embodiment, the trunnion structures are employed for the supporting portions 116. Therefore, rotational motion about the X-axis of the electromagnetic damper 100 is allowed. With this configuration, a predetermined vibration damping action can be provided while the electromagnetic damper 100 is moved about the X-axis in a tilted state, and thus the electromagnetic damper 100 favorable to be used in a suspension system for a vehicle can be provided.

### <Second Embodiment>

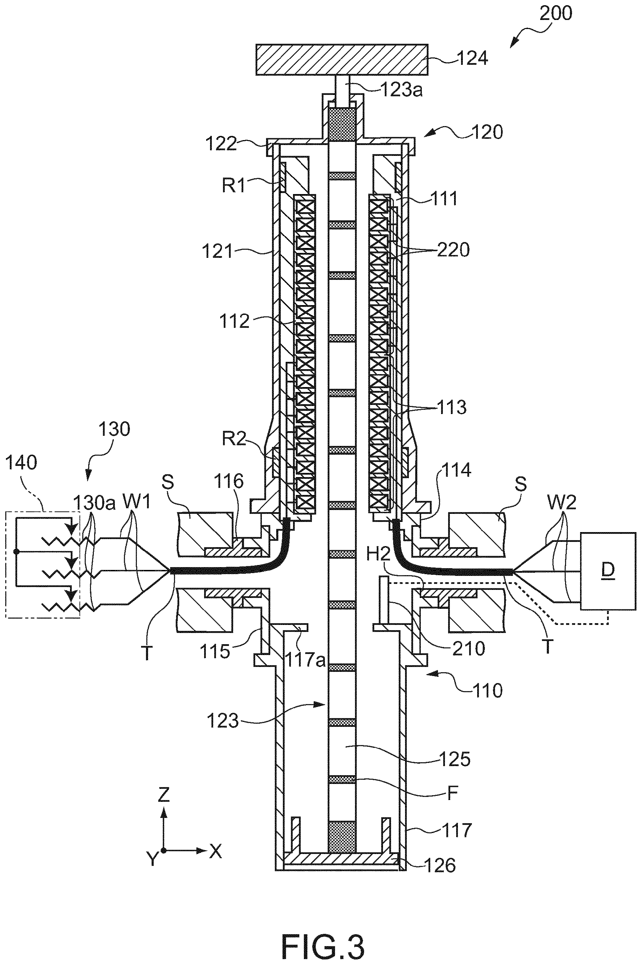

Fig. 3 is a cross-sectional view showing a configuration of an electromagnetic damper 200 according to a second embodiment of the present invention. Hereinafter, configurations similar to those of the first embodiment will be denoted by similar reference signs and detailed descriptions will be omitted.

As shown in Fig. 3, the second embodiment is the same as the first embodiment in that an electromagnetic damper 200 according to this embodiment includes the fixed portion 110, the movable portion 120, and the short circuit 130 while the second embodiment is different from the first embodiment in that the electromagnetic damper 200 according to this embodiment further includes a detector 210 and driving coils 220.

The detector 210 is configured to be capable of detecting a position of the rod 123 in the Z-axis direction. As shown in Fig. 3, the detector 210 is electrically connected to a driving circuit D wirelessly or via a wire. The detector 210 is provided at any position within the fixed portion 110 (e.g., the projection 117a of the bottom guide portion 117) and is opposed to the permanent magnets 125 retained by the rod 123 in a direction orthogonal to the Z-axis direction. The mounting position of the detector 210 is not limited to the mounting position shown in Fig. 3 and any mounting position can be employed as long as it is a position at which the detector 210 can detect the magnetic poles of the permanent magnets 125.

The detector 210 according to this embodiment detects a magnetic flux density of a magnetic flux extending from the S-poles (N-poles) to the N-poles (S-poles) of the permanent magnets 125 and outputs a detection signal including relative-position information of the movable portion 120 (rod 123) with respect to the fixed portion 110 to the driving circuit D.

The detector 210 is typically a magnetic sensor (pole sensor), but not particularly limited thereto. Further, a Hall element, a magneto-resistive element, a magnetic-impedance element, a bistable magnetic element, a fluxgate sensor, a proton precession magnetometer, a Faraday element, an electrodynamic magnetic sensor, a superconducting quantum interference device, or the like may be employed as the magnetic sensor, and any types can be employed therefor.

The driving coils 220 include a plurality of ring wires. As in the electromagnetic coils 113, the respective ring wires are arranged with a predetermined space therebetween in the Z-axis direction and include air core portions that communicate with the hollow portion 111a.

The driving coils 220 are retained in the coil holder 112 common to the electromagnetic coils 113. The coil holder 112 includes a region for retaining the driving coils 220 and a region for retaining the electromagnetic coils 113. In this embodiment, in Fig. 3, an upper half region of the coil holder 112 is set as the region for retaining the driving coils 220 and a lower half region of the coil holder 112 is set as the region for retaining the electromagnetic coils 113. The present technology is not limited thereto, and the respective ring wires constituting the driving coils 220 and the respective ring wires constituting the electromagnetic coils 113 may be respectively alternately arranged by using the three U, V and W phases as a single unit.

That is, the respective ring wires constituting the driving coils 220 are classified in three phases of a U-phase, a V-phase, and a W-phase. The ring wires of the respective phases are individually connected to the driving circuit D via wires W2.

The configuration of each of the ring wires constituting the driving coils 220 is not particularly limited. The ring wire includes, for example, a polyurethane copper wire, a polyester copper wire, a polyesterimide copper wire, a polyamidimide copper wire, a polyimide copper wire, and the like.

The driving circuit D is typically configured as a suspension control unit installed on the vehicle body side. As shown in Fig. 3, the driving circuit D is connected to the respective terminals of the driving coils 220 via the plurality of electrical wires W2. The plurality of electrical wires W2 are bundled as a tube T as in the electrical wires W1 and provide electrical connection between the driving coils 220 and the driving circuit D via a through-hole H2 penetrating the base portion 115 and the supporting portions 116 in the X-axis direction.

The driving circuit D supplies driving current generated on the basis of the output of the detector 210 to the driving coils 220. Specifically, the driving circuit D receives a detection signal from the detector 210, generates driving current of each phase in a manner that depends on a positional relationship between the driving coils 220 and the rod 123 (each magnetic pole of the permanent magnets 125), and supplies it to the driving coils 220. With this configuration, the driving coils 220 are excited, and an electromagnetic damper having a function as an electromagnetic actuator that generates thrust (electromagnetic force) that moves the rod 123 in the Z-axis direction is configured.

As described above, in accordance with this embodiment, the electromagnetic damper 200 having both of a passive damping action and an active damping action can be configured. With this configuration, it is possible to control the attitude of the vehicle body with higher expandability.

Further, in accordance with this embodiment, it is unnecessary to additionally provide a control circuit in order to provide such a passive damping action. Therefore, the configuration of the driving circuit D and control can be simplified. In addition, even if a failure occurs in the driving circuit D, a predetermined vibration damping action of the electromagnetic coils 113 due to the short circuit 130 is ensured. Therefore, a minimum damper function can be stably ensured.

### <Modified Example>

Although the embodiments of the present invention have been described above, the present invention is not limited only to the above-mentioned embodiments of the present invention and can be variously modified as a matter of course.

For example, in the electromagnetic dampers 100 and 200 according to the above-mentioned embodiments, the electromagnetic coils 113 are disposed on the side of the fixed portion 110 and the permanent magnets 125 are disposed on the side of the movable portion 120, but not limited thereto. The permanent magnets 125 may be disposed on the side of the fixed portion (e.g., inside of the first tubular member 111) and the electromagnetic coils 113 may be disposed on the side of the movable portion (e.g., the rod 123).

In addition, in each of the above-mentioned embodiments, the cases where the electromagnetic dampers 100 and 200 are applied to the damper for the automobile have been exemplified and described, but not limited thereto. The present invention is applicable also to dampers for railroads and architectural structures.

### Reference Signs List

100, 200...electromagnetic damper
110...fixed portion
113...electromagnetic coil
116...supporting portion
120...movable portion
123...rod
124...vibration receiving portion
125...permanent magnet
130...short circuit
130a...variable resistor
210...detector
220...driving coil
W1, W2...wire

## Claims

1. An electromagnetic damper, comprising:
a first tubular member;
a second tubular member that is mounted on the first tubular member and is configured to be capable of being relatively displaced in one axis direction with respect to the first tubular member;
a rod that extends in the one axis direction and is, at one end, fixed to the second tubular member;
a plurality of electromagnetic coils disposed in either one of an inside of the first tubular member or the rod;
a permanent magnet that generates induced electromotive force in the plurality of electromagnetic coils by relative displacement with respect to the plurality of electromagnetic coils and is disposed in the other of the inside of the first tubular member or the rod; and
a short circuit that is connected to the plurality of electromagnetic coils and shorts terminals of the plurality of electromagnetic coils to each other.

2. The electromagnetic damper according to claim 1, wherein
the short circuit includes a passive element capable of adjusting current flowing through the plurality of electromagnetic coils.

3. The electromagnetic damper according to claim 2, wherein
the passive element is a variable resistor.

4. The electromagnetic damper according to claim 3, further comprising
an adjuster that is installed in an outside of the first and second tubular members and is capable of adjusting an electrical resistance value of the variable resistor.

5. The electromagnetic damper according to claim 1, wherein
the plurality of electromagnetic coils include a plurality of ring wires including air core portions which are arranged in the one axis direction and which the rod penetrates, and
the short circuit shorts the plurality of ring wires to each other.

6. The electromagnetic damper according to claim 1, further comprising
a supporting portion that supports the first tubular member, wherein
the short circuit includes a wire that passes an inside of the supporting portion and connects to the plurality of electromagnetic coils.

7. The electromagnetic damper according to claim 1, further comprising:
a detector configured to be capable of detecting a position of the rod in the one axis direction; and
a driving coil that is disposed in the inside of the first tubular member and is configured to be capable of generating thrust in the one axis direction with respect to the rod when the driving coil is supplied with driving current generated on the basis of an output of the detector.
